## Europäisches Patentamt
## European Patent Office
## Office européen des brevets

(19)

(11) Numéro de publication: **0 002 979**
**B1**

(12)

# FASCICULE DE BREVET EUROPEEN

(45) Date de publication du fascicule du brevet: **12.10.83**

(51) Int. Cl.³: **B 65 G 51/04**

(21) Numéro de dépôt: **78400237.0**

(22) Date de dépôt: **13.12.78**

---

(54) **Installation de stockage et de déstockage automatiques et comptabilisés de numéraires.**

---

(30) Priorité: **29.12.77 FR 7739702**

(43) Date de publication de la demande:
**11.07.79 Bulletin 79/14**

(45) Mention de la délivrance du brevet:
**12.10.83 Bulletin 83/41**

(84) Etats contractants désignés:
**BE CH DE FR GB**

(56) Documents cités:
**DE - B - 1 107 598**
**FR - A - 1 560 541**
**FR - A - 2 251 057**
**US - A - 3 282 531**
**US - A - 3 949 364**

(73) Titulaire: **Compagnie du RONEO société anonyme**
**21, Avenue Victor Hugo**
**F-75116 Paris (FR)**
(73) Titulaire: **FLUIDELEC Société dite:**
**Rue Henri Farman**
**F-78530 Buc, Z.I. (FR)**

(72) Inventeur: **Thibonnier, Jacques**
**29 Boulevard Henri Ruel**
**F-94120 Fontenay S/Bois (FR)**
Inventeur: **Douard, Pierre-René**
**2, Place Royale**
**F-78000 Versailles (FR)**
Inventeur: **Thepot, Jean Marie Louis**
**122, rue Nationale**
**F-75013 Paris (FR)**

(74) Mandataire: **Robert, Jean-Pierre et al,**
**CABINET BEAU DE LOMENIE 55, rue**
**d'Amsterdam**
**F-75008 Paris (FR)**

---

Courier Press, Leamington Spa, England.

## Installation de stockage et de destockage automatiques et comptabilisés de numéraires

La présente invention a pour objet une installation permettant un transfert de fonds avec un minimum de manutention manuelle, donc un maximum de sécurité entre, par exemple le guichet et la chambre forte d'une agence de banque.

Le problème à résoudre comporte deux aspects principaux. Le premier réside dans la sécurité du transport des fonds à l'intérieur même d'un bâtiment bancaire. En effet, les fonds offrent une vulnérabilité maximale lorsqu'ils sont en transit entre la chambre forte et la caisse ou le guichet de l'établissement. Il s'agit donc de réduire cette vulnérabilité et automatiser le transfert est un facteur de réduction. En outre, il est nécessaire pour des raisons de sécurité également, de s'assurer qu'un minimum d'argent soit à la caisse et un maximum dans la chambre forte. Cette exigence conduit à prévoir des mouvements fréquents entre la caisse et la chambre forte et de faible quantité. L'automatisation du transfert est bien adaptée pour ces transferts fréquents.

Cependant, ces mouvements fréquents de fonds posent une difficulté de comptabilisation qui est le second aspect du problème à résoudre. En effet, il est une exigence pour de tels établissements de tenir constamment à jour la comptabilité de l'argent disposé en chambre forte. Là aussi, l'automatisation des transferts et le stockage sélectif des fonds selon l'invention, permettent de rendre automatique la comptabilité à tenir.

On connaît notamment par le brevet US—A—3 949 364, des dispositions de guichet automatique dans lesquelles la délivrance des billets depuis une chambre forte et le dépôt d'objets, valeurs ou argent, sont réalisés pneumatiquement après un certain nombre d'opérations d'identification de l'usager. Ces installations sans guichetier ont pour but principal de délivrer de l'argent à, ou de recevoir celui-ci, de la part d'un usager autorisé. En aucun cas les moyens mis en oeuvre ne sont prévus pour assurer le stockage-déstockage mécanisé de fonds entre un guichet (avec guichetier) et une chambre forte par lequel un minimum de manutention est obtenu et une comptabilité simple est tenue.

Le brevet FR—A—2 251 057 décrit une distribution pneumatique d'un guichet automatique à partir d'un coffre éloigné du guichet ce, afin d'éloigner de l'usager la réserve d'argent à distribuer. Ces dispositions ne permettent pas non plus d'atteindre les objectifs de l'invention.

L'installation dont la présente invention est l'objet comprend des moyens de convoyage des fonds entre deux postes et des moyens de stockage de ces fonds à l'un de ces postes qui permettent une "rotation" du stock c'est-à-dire l'utilisation directe sanns intervention manuelle des fonds déposés pour financer les retraits en même temps qu'une comptabilité continue des fonds tenus en chambre forte. Les moyens de l'invention sont pour ce faire très simples pour être facilement mis en oeuvre dans un petit établissement bancaire.

L'installation de l'invention comprend:

—une pluralité de cartouches de forme sensiblement cylindrique formant conteneur pour le transport et le stockage du numéraire,
—une installation tubulaire, s'étendant entre le poste d'entrée-sortie et le poste de stockage et au moins un dispositif de soufflerie associé à cette installation pour la propulsion des cartouches,
—un dispositif logique de commande de l'installation comportant une unité centrale reliée en entrée à au moins un pupitre disposé dans le poste d'entrée-sortie et en sortie au moins à ladite soufflerie (15), caractérisée en ce que:

chacune desdites cartouches formant conteneur de transport et de stockage d'une quantité de numéraire, un dispositif de stockage desdites cartouches est relié en série à l'intérieur de la chambre forte, à une ligne d'acheminement des cartouches depuis le poste d'entrée-sortie à la chambre forte, et à une ligne d'extraction des cartouches de la chambre forte vers ledit poste entrée-sortie au moyen d'un mécanisme à clapets disposé à l'extrémité des lignes susdites interne à la chambre forte pour isoler lesdites lignes pneumatiquement de ladite chambre tout en autorisant le passage des cartouches dans le ou hors du dispositif se stockage tandis que ladite soufflerie a son canal d'aspiration relié sélectivement à la ligne d'acheminement

et à l'atmosphère, et son canal de refoulement relié sélectivement à l'atmosphère, et à la ligne d'extraction

et qu'un dispositif de comptabilisation comportant un compteur-décompteur est relié à l'entrée et à la sortie du dispositif de stockage.

Dans un mode de réalisation, le dispositif de stockage est constitué à partir du mécanisme à clapet de la ligne d'acheminement, par un dispositif d'aiguillage vertical dans lequel les cartouches se déplacent par gravité depuis un tube d'entrée commun jusqu'à l'un des tubes d'une pluralité de tubes de sortie, sélectionné à partir de l'unité centrale de commande, au moyen d'aiguilles de direction internes, chacun desdits tubes comportant un mécanisme à clapet pour l'isoler pneumatiquement du tube qui le prolonge appartenant à un réseau tubulaire de stockage des cartouches, l'entrée de chacun des tubes susdits étant susceptible d'être connectée individuellement et sélectivement au canal de refoulement de la souflerie susdite par le moyen d'un détecteur de passage de la cartouche à son entrée, chacun des tubes se terminant par une partie sensiblement verticale à la base de laquelle est disposée une plaque d'obturation escamotable, qui constitue un organe de retenue et de libération des cartouches, commandé par l'unité centrale susdite, tandis qu'au delà de cette plaque, chacun desdits tubes se prolonge d'un guide tubulaire ajouré, de hauteur sensiblement égale à celle d'une cartouche, obturé transversalement à sa partie inférieure par une seconde plaque d'obturation escamotable, ledit guide constituant l'entrée de chacun des tubes d'un réseau convergent collecteur dont la sortie unique est reliée au mécanisme à clapet appartenant à la ligne d'extraction, la partie finale de cette sortie étant susceptible d'être connectée au canal d'aspiration de ladite soufflerie lors de l'escamotage de la seconde plaque susdite.

Le réseau tubulaire de stockage dans une version simplifiée de l'invention ne peut comprendre qu'un seul tube.

L'invention sera mieux comprise au cours de la description donnée ci-après, à titre d'exemple purement indicatif et non limitatif, qui permettra d'en dégager les avantages et les caractéristiques secondaires.

Il sera fait référence aux dessins annexés dans lesquels:

—La figure 1 est une schéma de principe illustrant l'installation selon l'invention,
—La figure 2 montre schématiquement l'agencement d'un dispositif de stockage sélectif à deux voies, mis en oeuvre dans l'installation selon l'invention,
—La figure 3 illustre par un schéma un mécanisme à clapet mis en oeuvre dans l'invention,
—La figure 4 est un schéma du dispositif d'aiguillage mis en oeuvre dans l'installation de la figure 2,
—La figure 5 illustre schématiquement la liaison entre l'extrémité d'un tube de stockage et le réseau de tube collecteur.

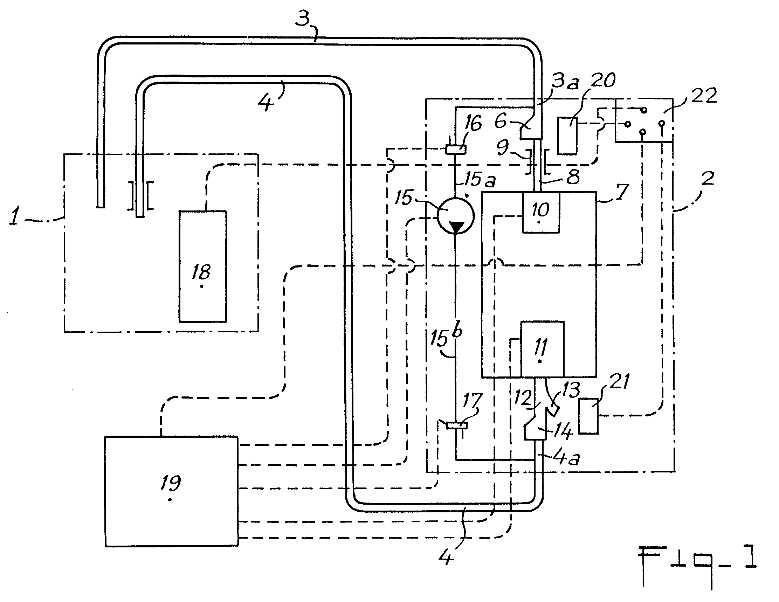

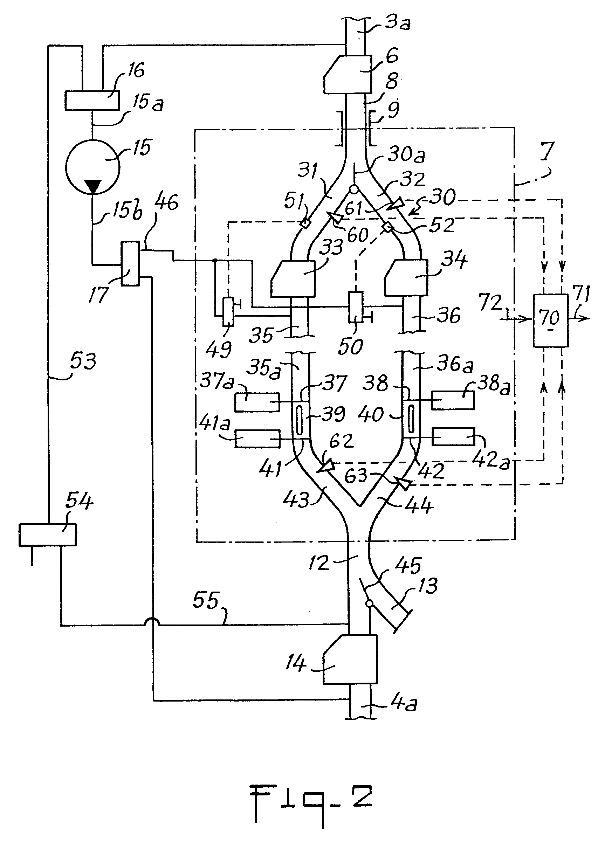

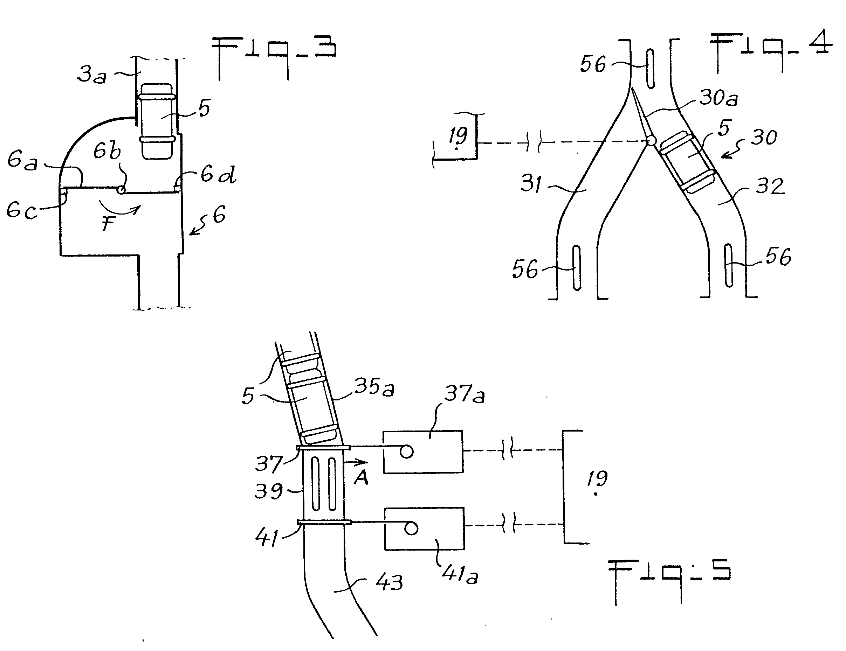

En se reportant tout d'abord à la figure 1, on voit une installation selon l'invention qui s'étend entre un poste 1 d'entrée-sortie de numéraire qui est, par exemple, un guichet ou une caisse de banque et un poste de stockage 2 de ce numéraire qui sera la chambre forte de cet établissement bancaire. Cette installation comporte une ligne 3 d'acheminement des fonds du poste 1 au poste 2 et une ligne 4 d'extraction des fonds du poste 2 pour les conduire au poste 1. Les fonds sont enfermés dans des cartouches 5 (voir figures 3, 4 et 5) de forme sensiblement cylindrique de manière à pouvoir coulisser dans l'installation. Ces cartouches contiennent des valeurs prédéterminées d'argent qui les "personnalisent" afin de les stocker de manière sélective dans la chambre forte sur des lignes séparées en fonction de ces valeurs. Le stockage sélectif sera expliqué plus en détail en regard de la figure 2.

L'extrémité 3a de la ligne d'acheminement 3 est située dans la chambre forte 2 et est équipée d'un mécanisme à clapet 6 qui permet d'isoler pneumatiquement cette ligne de la partie de l'installation située en aval de ce mécanisme tout en permettant à une cartouche 5 arrivant en 3a, de poursuivre sa course en direction de cette partie d'installation. Le principe de ce mécanisme à clapet, connu en lui-même, est illustré par la figure 3 sur laquelle on voit qu'il comporte un volet 6a articulé en 6b et pourvu d'un organe élastique autour de son axe de manière à le rappeler suivant f en butée de manière étanche sur des portées 6c et 6d. Ce clapet isole le tube 3a de la partie de l'installation située en aval s'il règne dans ce tube une dépression. Une cartouche 5 arrivant dans le mécanisme 6, fait tourner, du fait de son énergie cinétique, le volet 6a et atteint le raccord inférieur du mécanisme. Le volet ensuite se referme sous l'effet de l'organe de rappel.

La sortie du mécanisme à clapet 6 est reliée à un dispositif de stockage 7 au moyen d'un tube d'entrée 8, lequel tube d'entrée possède une ouverture latérale obturable par un manchon coulissant 9 permettant l'introduction à ce niveau de cartouches dans l'installation. Le dispositif 7 comporte un mécanisme de triage ou d'aiguillage symbolisé en 10 et un mécanisme collecteur 11 qui seront explicités en regard de la figure 2.

A la sortie du dispositif de stockage, on voit un tube de sortie unique 12, possédant une dérivation 13, laquelle dérivation permet de récupérer dans la chambre forte, des cartouches destockées. Le tube 12 est connecté à un mécanisme à clapet 14, semblable à celui 6 précédemment décrit. Le mécanisme 14 est connecté à l'extrémité 4a interne à la chambre forte de la ligne d'extraction 4 et isole cette dernière du tube 12 lorsqu'il y règne une surpression.

Une soufflerie 15 a son canal d'aspiration 15a susceptible, au moyen d'une vanne 16, d'être relié soit à la chambre forte, soit à la partie 3a susdite et son canal de refoulement 15b susceptible au moyen d'une vanne 17 d'être relié soit à la partie 4a susdite, soit à l'atmosphère.

Enfin, l'installation selon l'invention comporte un dispositif logique de commande de son fonctionnement comportant un pupitre principal 18 situé dans le poste 1, une unité centrale 19, un pupitre secondaire d'entrée 20 situé dans la chambre forte et un pupitre secondaire de sortie 21, situé dans la chambre forte également.

L'unité centrale reçoit également en entrée les pupitres 18, 20 ou 21 selon la position choisie d'un commutateur 22 situé dans la chambre forte qui permet de sélectionner manuellement l'un des pupitres à mettre en service à l'exclusion des deux autres. En sortie, l'unité centrale est reliée à la soufflerie 15 et ses vannes 16 et 17, au dispositif de stockage 7 (notamment au mécanisme de triage 10 et collecteur 11 de ce dernier) et à un mécanisme d'aiguillage de mise en, ou hors, service de la dérivation 13.

Sur la figure 2, on a représenté un dispositif de stockage 7, comportant deux voies pour des raisons de simplicité de l'explication. Ce mécanisme, sur la base du principe de l'invention, peut comporter un nombre quelconque de voies. A chacune de ces voies est affectée une valeur déterminée, correspondant à la valeur en numéraire des cartouches qu'elle est susceptible de recevoir et stocker. On retrouve sur cette figure, certains des éléments décrits précédemment avec les mêmes références.

Le tube 8 est connecté à un dispositif d'aiguillage 30, constitué par un réseau tubulaire (ici à deux tubes 31 et 32 divergents). A la jonction de deux tubes se trouve articulée une aiguille 30a susceptible, au moyen d'un organe moteur, non représenté et commandé par l'unité centrale 19, de constituer un guide pour le passage d'une cartouche du tube 8 soit vers le tube 31, soit vers le tube 32 suivant la position prise en réponse à la commande susdite. Ces tubes 31 et 32 sont disposés dans un plan sensiblement vertical. Ils possèdent à leur extrémité inférieure un clapet 33, 34 semblable à celui 6 décrit ci-avant (figure 3). La sortie de chacun de ces clapets est reliée à un tube 35, 36 appartenant à un réseau tubulaire de stockage qui peut affecter toute forme, notamment en fonction de la place disponible ou réservée dans la chambre forte pour le stockage.

L'autre extrémité 35a, 36a de ces tubes est aménagée dans un plan sensiblement vertical de manière à former des colonnes verticales de cartouches stockées.

L'organe de retenue des cartouches à la base de ces colonnes est constitué par une plaque 37, 38 transversale escamotable au moyen d'organes moteurs 37a, 38a, commandés par l'unité centrale 19.

Au-delà de ces plaques, chacun des tubes du réseau tubulaire susdit est prolongé par une enceinte tubulaire ajourée 39, 40, d'une longueur sensiblement égale à celle d'une cartouche. Ces enceintes sont chacune fermées à leur base par des plaques escamotables 41, 42, semblables à celles 37, 38 décrites cidessus, au moyen d'organes moteurs 41a, 42a, commandés par l'unité centrale 19.

Chacune desdites enceintes ajourées est ensuite réunie au-delà desdites secondes plaques au tube de sortie unique 12 décrit en regard de la figure 1, au moyen d'un réseau collecteur de tubes convergents 43, 44. Au raccordement des tubes 12 et 13, une aiguille 45, semblable à l'aiguille 30a commandée de la même manière par l'unité centrale 19, permet de mettre en, ou hors, service la dérivation 13.

A proximité des mécanismes à clapet 33 et 34, les tubes 35 et 36 sont reliés au canal de refoulement 15b de la soufflerie 15 par l'intermédiaire d'un conduit 46, issu de la vanne 17 relié à chacun des tubes 35, 36 par l'intermédiaire d'obturateurs 49 et 50. La vanne 17 est reliée à l'unité centrale de commande alors que les obturateurs 49 et 50 sont mis dans leur position d'ouverture des conduits qui les traversent au moyen de contacts 51 et 52, lorsque ceux-ci sont actionnés par le passage d'une cartouche à leur niveau, c'est-à-dire immédiatement avant (ou après) les clapets 33, 34. Le canal d'aspiration 15a de la soufflerie 15 est connecté au niveau de la vanne à un conduit 53 qui comporte une vanne 54 commandée par l'unité centrale 19, permettant la mise en communication du conduit 53, soit avec l'atmosphère, soit avec un conduit 55 relié au tube 12 à proximité du mécanisme à clapet 14.

La figure 4 montre l'agencement du dispositif d'aiguillage 30 avec son aiguille 30a. On remarque ce dispositif possède dans la paroi des tubes des ajours 56 de manière que la cartouche 5 en circulant dans ce dispositif, ne soit pas retenue par des compressions ou dépressions de l'air contenu dans le dispositif.

Enfin, la figure 5 montre à plus grande échelle, l'extrémité 35a du tube 35 comportant des cartouches 5 empilées et retenues par la plaque escamotable 37. Il faut remarquer que ladite extrémité 35a est légèrement inclinée sur la plaque 37, de manière à faire un angle obtus avec la direction d'escamotage A de ladite plaque. Cette disposition présente l'avantage suivant. Quand la plaque 37 est escamotée, une cartouche 5 tombe sur la plaque 41 dans l'enceinte 39. La cartouche 5 suivante repose ainsi sur la cartouche située dans l'enceinte par un point, du fait de leurs inclinaisons différentes. Les plans d'extrémités adjacentes de ces cartouches forment un angle ouvert du côté de la plaque 37 escamotée, ce qui permet une introduction aisée de la plaque lorsqu'elle n'est plus escamotée et une séparation facile de la cartouche inférieure du reste de la colonne contenu dans le tube 35.

Le fonctionnement de l'installation selon l'invention se déroule de la manière suivante. On supposera que le caissier veuille stocker une cartouche 5 dans la chambre forte. Sur le pupitre 18, il affiche la valeur de la cartouche qui doit être stockée, donc détermine la ligne de stockage qui doit la recueillir. Cet ordre, envoyé à l'unité centrale 19, est transmis par cette dernière à l'aiguille 30a qui s'incline de manière à, par exemple, former un guide pour la cartouche entre le tube 8 et le tube 31. Dans le même temps, les vannes 16 et 17 sont commandées pour que, d'une part, il y ait possibilité d'aspiration dans la ligne 3 et de refoulement dans le conduit 46 comportant un clapet taré de décharge non représenté.

La soufflerie 15 est alors mise en route, soit par l'unité 19, avec une certaine temporisation, soit par un contact non représenté, disposé à l'entrée de la ligne 3 et actionné lors de la mise en place de la cartouche. Le parcours de la ligne 3 se fait par aspiration jusqu'au clapet 6. La cartouche traverse alors ce clapet 6 et glisse par énergie cinétique et gravité, le long du tube 8 et du tube 31. Au passage, elle actionne le contact 51 qui ouvre la communication du conduit 46 avec le tube 35. La cartouche par gravité traverse le clapet 33 et est ensuite prise en charge par le débit d'air refoulé dans le conduit 35 qui la propulse jusqu'à ce qu'elle vienne en butée derrière la dernière cartouche de la colonne contenue dans l'extrémité 35a de ce tube. Des évents, judicieusement disposés et au besoin obturables, sont placés sur cette dernière partie 35a de manière à éviter ou à contrôler la formation de coussins d'air au-devant de la cartouche en fin de parcours et à purger les tubes de stockage de l'air sous pression.

La cartouche est alors stockée et l'unité 19 en reçoit l'information et commande la mise au repos de l'installation.

Le caissier veut alors obtenir une cartouche de valeur déterminée. Il affiche sur son pupitre 18, ladite valeur qui est interprétée par l'unité centrale 19 qui commande alors l'escamotage de par exemple, la plaque 38. Une cartouche tombe sur la plaque 42 et la plaque 38 revient dans sa position initiale pour séparer cette cartouche du reste de la colonne. Après cette séquence, la plaque 42 s'escamote pendant que la soufflerie est mise en route et que le tube 12 est mis en communication avec son canal d'aspiration 15a, au moyen des vannes 16 et 54. Dans le même temps, l'extrémité 4a de la ligne d'extraction est mise en communication avec le canal de refoulement 15b de la soufflerie par le moyen de la vanne 17.

La cartouche est aspirée le long tu tube 44 et du tube 12 (l'aiguille 45 étant dans sa position "d'obturation" de la dérivation 13) puis passe le clapet 14 pour être propulsée dans la ligne 4 par le débit d'air qui y est refoulé par la soufflerie. L'extrémité de caisse de la ligne 4 est pourvue d'une ouverture latérale et d'un manchon coulissant qui permet, de manière connue, l'atteinte et la sortie de la cartouche par le caissier.

Il se peut qu'il faille faire un stockage de cartouches à partir de la chambre forte elle-même lors par exemple, d'une arrivée extérieure de fonds. A ce moment, un opérateur agit sur le commutateur 22 qui coupe la liaison du pupitre 18 avec l'unité centrale 19 et met en service le pupitre secondaire 20. Les affichages se font alors sur ce dernier, via l'unité centrale et l'introduction des cartouches au niveau du tube 8 par l'intermédiaire du manchon 9, les commandes de l'unité centrale étant, en sortie, identiques à celles précédemment décrites.

De même, pour permettre une sortie de fonds hors de l'établissement bancaire, on peut avoir recours à la dérivation 13. Au niveau de commutateur 22, l'opérateur met alors en service le pupitre secondaire 21. Cette mise en service s'accompagne alors d'une commande automatique de l'aiguille 45 dans sa position de déviation des cartouches vers la dérivation 13. L'extraction de fonds s'opère alors comme décrit précédemment.

On voit que dans l'installation selon l'invention, les organes "moteurs" du transfert de fonds sont placés dans la chambre forte ce qui est un facteur de sécurité de cette installation puisque l'accès à ces organes n'est pas immédiat.

En outre, cette installation se prête à la mise en place de dispositifs d'alarme ou de contrôle du tranfert des cartouches sur tout leur trajet, soit par des contacts reliés à des minuteurs étalons, soit par mesure constante des débits de la soufflerie.

Par ailleurs, il est aisé d'imaginer une version simplifiée de l'invention, comportant une seule voie de stockage. Celle-ci se déduit de la figure 2 par suppression sur cette dernière de l'aiguille 30a de la voie 32 à 44 avec tous les éléments qu'elle comporte et de l'obturateur 50 et la branche du conduit 46 sur laquelle il est disposé.

Enfin, l'invention permet la mise en place aisée d'un appareil compteur décompteur possédant des senseurs à l'entrée des tubes 35 et 36 et à l'entrée des tubes 43 et 44, ces senseurs étant reliés à une unité logique de comptage décomptage possédant un dispositif d'affichage dans la chambre forte et des rappels de cet affichage dans divers endroits de l'établissement bancaire.

On a représenté sur la figure 2, à titre d'illustration schématique un tel appareil de comptabilisation. Chacun des tubes 35 et 36 est pourvu d'un senseur 60, 61 qui envoie au passage d'une cartouche, une information à une unité logique de comptage décomptage 70, laquelle comporte en mémoire, la valeur propre de la voie de stockage. Cette information est exploitée par cette unité de manière à tenir à jour par addition la somme d'argent stockée. De même, sur les tubes 43, 44 des senseurs 62, 63 envoient une information à l'unité 70 au passage d'une cartouche dans les tubes. L'unité exploite cette information dans le sens d'une soustraction à la somme d'argent stockée. Le résultat 71 de ces opérations peut être transmis en direction de postes terminaux non représentés.

Il faut noter par ailleurs que l'installation selon l'invention ne peut comporter qu'une voie, notamment pour de petites agences bancaires. Dans ce cas, le stockage peut se faire par cartouches de valeurs différentes. Une entrée supplémentaire 72 est alors prévue dans l'unité de comptabilisation 70 permettant d'introduire manuellement la valeur de la cartouche stockée et celle de la cartouche destockée.

L'invention trouve une application intéressante dans le domaine de l'équipement des établissements manipulant de l'argent et des objets précieux ou de valeur.

On peut imaginer, sans sortir du cadre de l'invention, que l'installation décrite peut comporter des variantes notamment en ce qui concerne l'équipement pneumatique qu'elle comporte qui peut posséder deux souffleries, une pour l'acheminement et le stockage, l'autre pour l'extraction, la première devant être un peu plus puissante que l'autre. Dans ce cas, la première soufflerie assure l'acheminement par aspiration et le stockage par refoulement, et la seconde soufflerie assurant alors une aspiration dans la partie collectrice et un refoulement dans la ligne d'extraction.

## Revendications

1. Installation de stockage et de destockage automatiques et comptabilisés de numéraire entre un poste (1) d'entrée-sortie et un poste de stockage (2) de ce numéraire formant chambre forte, comprenant:

—une pluralité de cartouches (5) de forme sensiblement cylindrique formant contenur pour le transport et le stockage du numéraire,

—une installation (3, 4) tubulaire, s'étendant entre le poste d'entrée-sortie (1) et le poste de stockage (2) et au moins un dispositif de soufflerie (15) associé à cette installation (3, 4) pour la propulsion des cartouches (5),

—un dispositif logique de commande (19) de l'installation comportant une unité centrale reliée en entrée à au moins un pupitre (18) disposé dans le poste d'entrée-sortie (1) et en sortie au moins à ladite soufflerie (15), caractérisée en ce que:

chacune desdites cartouches (5) formant conteneur de transport et de stockage d'une quantité de numéraire, un dispositif de stockage (7) desdites cartouches est relié en série à l'intérieur de la chambre forte (2), à une ligne d'acheminement (3) des cartouches depuis de poste d'entrée-sortie (1) à la chambre forte (2), et à une ligne d'extraction (4) des cartouches de la chambre forte (2) vers ledit poste entrée-sortie (1) au moyen d'un mécanisme à clapets (6, 14) disposé à l'extrémité des lignes (3, 4) susdites interne à la chambre forte (2) pour isoler lesdites lignes pneumatiquement de ladite chambre tout en autorisant le passage des cartouches dans le ou hors du dispositif de stockage (7) tandis que ladite soufflerie (15) a son canal d'aspiration (15a) relié sélectivement à la ligne d'acheminement (3) et à l'atmosphère, et son canal de refoulement (15b) relié sélectivement à l'atmosphère, et à la ligne d'extraction (4) et qu'un dispositif de comptabilisation (70) comportant un compteur-décompteur est relié à l'entrée et à la sortie du dispositif de stockage (7).

2. Installation selon la revendication 1, caractérisée en ce qu'elle comporte dans la chambre forte (2) un poste d'entrée secondaire (9) entre le mécanisme à clapet (6) de la ligne d'acheminement (3) et le dispositif de stockage (10) et un poste de sortie secondaire (13) entre le dispositif de stockage et le mécanisme à clapet (14) de la ligne d'extraction (4).

3. Installation selon la revendication 1 ou la revendication 2, caractérisée en ce que le dispositif de stockage est constitué à partir du mécanisme à clapet (6) de la ligne d'acheminement, par un dispositif (30) d'aiguillage vertical dans lequel es cartouches (5) se déplacent par gravité depuis un tube d'entrée commun (8) jusqu'à l'un des tubes (31, 32) d'une pluralité de tubes de sortie sélectionné à partir de l'unité centrale de commande (19) au moyen d'aiguilles (30a) de direction internes, chacun desdits tubes comportant un mécanisme à clapet (33, 34) pour l'isoler penumatiquement du tube qui le prolonge, appartenant à un réseau tubulaire (35, 36) de stockage des cartouches, l'entrée de chacun des tubes susdits étant susceptible d'être connectée individuellement et sélectivement au canal de refoulement (15b) de la soufflerie susdite par le moyen d'un détecteur (51, 52) du passage de la cartouche (5) à son entrée, chacun des tubes se terminant par une partie (35a, 36a) sensiblement verticale à la base de laquelle est disposée une plaque d'obturation (37, 38) escamotable, qui constitue un organe de retenue et de libération des cartouches, commandé par l'unité centrale (19) susdite, tandis qu'au-delà de cette plaque, chacun desdits tubes se prolonge d'un guide tubulaire ajouré (39, 40) de hauteur sensiblement égale à celle d'une cartouche, obturé transversalement à sa partie inférieure par une seconde plaque d'obturation (41, 42) escamotable, ledit guide constituant l'entrée de chacun des tubes d'un réseau convergent collecteur (43, 44) dont la sortie unique est reliée au mécanisme à clapet (14) appartenant à la ligne d'extraction (4), la partie finale de cette sortie étant susceptible d'être connectée au canal d'aspiration (15a) de ladite soufflerie lors de l'escamotage de la seconde plaque susdite.

4. Installation selon la revendication 3, caractérisée en ce que la partie finale (35a, 36) de chacun des tubes du réseau tubulaire susdit est inclinée de manière à former un angle obtus par rapport à la direction d'escamotage (37, 38) de la première plaque.

5. Installation selon l'une quelconque des revendications précédentes, caractérisée en ce que la ligne d'acheminement (3) et le réseau tubulaire (35, 36) susdit sont connectés à une première soufflerie tandis que la ligne d'extraction (4) et le réseau collecteur (43, 44) susdits sont connectés à une second soufflerie.

6. Installation selon l'une quelconque des revendications 2 à 5 caractérisée en ce que le poste secondaire d'entrée des cartouches est constitué par une ouverture latérale du tube d'entrée (8) du dispositif d'aiguillage obturable par un manchon coulissant (9) tandis que le poste secondaire de sortie des cartouches est constitué par une dérivation (13) de la sortie unique du réseau collecteur mise en service au moyen d'une aiguille interne (45).

7. Installation selon la revendication 1, ou la revendication 2, caractérisée en ce que le dispositif de stockage (10) est constitué à partir du mécanisme à clapet (6) de la ligne d'acheminement par un tube vertical (31, 32) dans lequel les cartouches se déplacent par gravité un mécanisme à clapet (33) disposé à son extrémité inférieure pour l'isoler d'un tube de stockage (35) le prolongeant, ledit tube de stockage étant susceptible d'être relié au canal de refoulement (15b) de la soufflerie (15) par le moyen d'un détecteur de passage (51) de chaque cartouche à son entrée, la partie terminale (35a) de ce tube étant sensiblement verticale et possédant à sa base une plaque d'obturation (37) escamotable qui constitue un organe de retenue et de libération des cartouches (5), commandé par l'unité centrale (19) susdite, tandis qu'au-delà de cette plaque, ledit tube se prolonge d'un guide tubulaire ajouré (39) de hauteur sensiblement égale à celle d'une cartouche, obturé transversalement à sa partie inférieure par une seconde plaque (41) d'obturation escamotable, ce guide étant relié au mécanisme à clapet (14) appartenant à la ligne d'extraction, la partie finale de cette sortie étant susceptible d'être connectée au canal d'aspiration (15a) de ladite soufflerie lors de l'escamotage de la seconde plaque susdite (41).

**Patentansprüche**

1. Vorrichtung zur automatischen und buchungsmäßigen Lagerung Entnahme von Geld zwischen einer Eingabe/Ausgabestation (1) und einer Lagerstation (2) für dieses Geld in Form eines Tresorraumes, mit einer Mehrzahl von Kartuschen (5) von im wesentlichen zylindrischer Form, die Behälter für den Transport und de Lagerung des Geldes bilden, einer rohrförmigen Einrichtung (3, 4), die sich zwischen der Eingabe/Ausgabestation (1) und der Lagerstation (2) erstreckt und zumindest einer zu dieser Einrichtung (3, 4) gehörigen Gebläseeinrichtung (15) zum Vorwärtstreiben der Kartuschen (5), einer logischen Steuereinrichtung (19) der Vorrichtung mit einer Zentraleinheit, die eingangsmäßig an zumindest ein in der Eingabe/Ausgabestation vorgesehenes Pult (18) und ausgangsmäßig zumindest an die Gebläseeinrichtung (15) angeschlossen ist, dadurch gekennzeichnet, daß jede der Kartuschen einer Transport- und Lagerbehälter für eine Geldmenge bildet, daß eine Lagereinrichtung (7) der Kartuschen im Inneren des Tresorraumes (2) mit einer Förderleitung (3) der Kartuschen von der Eingabe/Ausgabestation (1) bis zum Tresorraum (2) und mit einer Abzugsleitung (4) der Kartuschen vom Tresorraum (2) zur Eingabe/ Ausgabestation (1) mittels eines am innerhalb des Tresorraumes (2) befindlichen Ende der Leitungen (3, 4) angeordneten Klappenmechanismus' (6, 14) in Serie geschaltet ist, welcher Klappenmechanismus die Leitungen pneumatisch vom Tresorraum trennt, dabei jedoch den Durchlauf der Kartuschen in die bzw. aus der Lagereinrichtung (7) gestattet, wenn die Gebläseeinrichtung (15) mit ihrem Saugkanal (15a) wahlweise mit der Förderleitung (3) oder der Atmosphäre und mit ihrem Rückflußkanal (15b) wahlweise mit der Atmosphäre oder der Abzugsleitung (4) in Verbindung steht, und daß eine Buchungseinrichtung (70) mit einem Additions/Subtraktionszähler an den Eingang und Ausgang der Lagereinrichtung (7) angeschlossen ist.

2. Einrichtung nach Anspruch 1, dadurch gekennzeichnet, daß sie im Tresorraum (2) eine Hilfseingabestation (9) zwischen dem Klappenmechanismus (6) der Förderleitung (3) und der Lagereinrichtung (10) und eine Hilfsausgabestation (13) zwischen der Lagereinrichtung und dem Klappenmechanismus (14) der Abzugsleitung (4) umfaßt.

3. Einrichtung nach Anspruch 1 oder 2, dadurch gekennzeichnet, daß die Lagereinrichtung ab dem Klappenmechanismus (6) der Förderleitung durch eine vertikale Weicheneinrichtung (30) gebildet ist, in welcher sich die Kartuschen (5) durch die Schwerkraft von einem gemeinsamen Eingangsrohr (8) bis zu einem der Rohre (31, 32) einer Mehrzahl von Ausgangsrohren bewegen, welches von der zentralen Steuereinheit (19) mittels Weichen (30a) in Innenrichtung ausgewählt wird, wobei jedes der zu einem Rohrnetz (35, 36) zur Speicherung der Kartuschen gehörigen Rohre einen Klappenmechanismus (33, 34) zur pneumatischen Trennung desselben von dem in seiner Verlängerung angeordneten Rohr umfaßt, wobei der Eingang jedes der Rohre mittels eines Detektors (51, 52) für den Durchlauf der Kartusche (5) an seinem Eingang individuell und selektiv an den Rückflußkanal (15b) des Gebläses angeschlossen werden kann und jedes der Rohre in einem im wesentlichen vertikalen Teil (35a, 36a) endet, an dessen Basis eine einziehbare Sperrplatte (37, 38) angeordnet ist, die ein Organ zum Zurückhalten bzw. Freigeben der Kartuschen bildet und von der Zentraleinheit (19) gesteuert wird, wobei jenseits dieser Platte jedes der Rohre durch eine mit Löchern versehene rohrförmige Führung (39, 40) von im wesentlichen gleicher Höhe wie eine Kartusche verlängert ist, welche in ihrem Unterteil durch eine zweite einziehbare Sperrplatte (41, 42) in Querrichtung gesperrt ist und den Eingang jedes der Rohre eines zusammenlaufenden Sammelnetzes (43, 44) bildet, dessen einziger Ausgang mit dem zur Abzugsleitung (4) gehörigen Klappenmechanismus (14) verbunden ist, wobei der Endteil dieses Ausgangs bei einziehen der zweiten Sperrplatte mit dem Saugkanal (15a) des Gebläses verbindbar ist.

4. Vorrichtung nach Anspruch 3, dadurch gekennzeichnet, daß der Endteil (35a, 36a) jedes der Rohre des Rohrnetzes derart geneigt ist, daß er zur Einziehrichtung der ersten Platte (37, 38) einen Stumpfen Winkel bildet.

5. Vorrichtung nach einem der vorhegehenden Ansprüche, dadurch gekennzeichnet, daß die Förderleitung (3) und das Rohrnetz (35, 36) an ein erstes Gebläse angeschlossen sind, wogegen die abzugsleitung (4) und das Sammelnetz (43, 44) an ein zweites Gebäse angeschlossen sind.

6. Vorrichtung nach einem der Ansprüche 2 bis 5, dadurch gekennzeichnet, daß die Kartuschenhilfseingabestation durch eine seitliche Öffnung im Eingaberohr (8) der Weicheneinrichtung gebildet ist, welche durch eine Gleitmuffe (9) verschließbar ist, während die Kartuschenhilfsabgabestation durch eine Ableitung (13) vom einzigen Ausgang des Sammelnetzes gebildet ist und mittels einer Innenweiche (45) betätigt wird.

7. Vorrichtung nach Anspruch 1 oder 2, dadurch gekennzeichnet, daß die Speichereinrichtung (10) ab dem Klappenmechanismus (6) der Förderleitung durch ein vertikales Rohr (31, 32) gebildet ist, in welchem sich die Kartuschen durch die Schwerkraft bewegen und welches durch einen zur Abtrennung desselben vom einem Lagerrohr (35) vorgesehenen Klappenmechanismus (33) verlängert ist, welches Lagerrohr mit dem Rückflußkanal (15b) des Gebläses (15) mittels eines Durchlaufdetektors (51) für jede Kartusche an seinem Eingang verbindbar ist, wobei der Endteil (35a) dieses Rohres im wesentlichen vertikal ist und an seiner Basis eine einziehbare Sperrplatte (37) besitzt, die ein von Zentraleinheit (19) gesteurtes Halte- bzw. Freigabeorgan für die Kartuschen (5) bildet, wobei das Rohr jenseits dieser Platte durch eine mit Löchern versehene rohrförmige Führung (39) vom im wesentlichen gleicher Höhe wie eine Kartusche verlängert ist, welche in ihrem Unterteil durch eine zweite einziehbare Sperrplatte (41) in Querrichtung gesperrt ist und mit dem zur Abzugsleitung gehörigen Klappenmechanismus (14) verbunden ist, wobei der Endteil dieses Ausgangs bei Einziehen der zweiten Platte (41) mit dem Saugkanal (15a) des Gebläses verbindbar ist.

**Claims**

1. Installation for the automatic and accounted storing and retrieving of currency between an input-output station (1) and a station (2) for storing said currency, forming strong-room, comprising:

—a plurality of cartridges (5) of substantially cylindrical shape forming containers for conveying and storing said currency,
—a tubular installation (3, 4), extending between the input-output station (1) and the storing station (2) and at least one blower device (15) associated to said installation (3, 4) for propelling the said cartridges (5),
—one logic device (19) for controlling the installation, comprising a central unit connected to the input of at least one control desk (18) situated in the input-output station (1) and to the output of at least the said blower device (15), characterized in that: since each of said cartridges (5) forms containers for the conveying and storage of a quantity of currency, a storing device (7) for said cartridges is connected in series inside the strong-room (2), to a cartridge-conveying line (3) going from the strong-room (2) and to a cartridge-extracting line, (4) removing the cartridges from the strong-room (2) towards the said input-output station (1) by means of a valve mechanism (6, 14) placed at the end of the said lines (3, 4) inside said strong-room (2) to pneumatically isolate said lines from said chamber whilst authorizing the passage of the cartridges into or out of the storage device (7) whereas said blower device (15) has its induction channel (15a) selectively connected to the conveying line (3) and to the atmosphere, and its delivery channel selectively connected to the atmosphere, and to the extracting line (4) and that an accounting device (70) comprising a reversible counter is connected to the input and to the output of the storing device (7).

2. Installation according to claim 1, characterized in that it comprises inside the strong-room (2) a secondary input station (9) between the valve mechanism (6) of the conveying line (3) and the storing device (10) and a secondary output station (13) between the storing device and the valve mechanism (14) of the extracting line (4).

3. Installation according to claim 1 or claim 2, characterized in that the storing device is constituted from the valve mechanism (6) of the conveying line, by a vertical deflecting device (30) in which the cartridges (5) move by gravity from a joint inlet tube (8) as far as one of the tubes (31, 32) of a plurality of outlet tubes selected from the central control unit (19) by means of internal pointers (30a), each of said tubes comprising a valve mechanism (33, 34) to isolate it pneumatically from the tube extending from it, belonging to a tubular network (35, 36) for storing the cartridges, the inlet to each of said tubes being adapted to be individually and selectively connected to the delivery channel (15b) of the blower device via means (51, 52) for detecting the passage of a coming-in cartridge (5), each of said tubes ending into a substantially vertical part (35a, 36a) at the base of which is placed a retractable closing plate (37, 38) which constitutes a retaining or releasing member for the cartridges, controlled by the said central unit (19) whereas beyond said plate, each of said tubes is extended by a perforated tubular guide (39, 40) of height substantially equal to that of a cartridge, which guide is closed off cross-wise at its lower part by a second retractable closing plate (41, 42), said guide constituting the inlet to each one of the tubes of a convergent collecting network (43, 44) the only outlet of which is connected to the valve mechanism (14) belonging to the extracting line (4), the end part of said outlet being adapted to be connected to the induction channel (15a) of said blower device when the said second plate is retracted.

4. Installation according to claim 3, characterized in that the end part (35a, 36a) of each tube from said tubular network is inclined so as to form an obtuse angle with respect to the retracting direction (37, 38) of the first plate.

5. Installation according to any one of the preceding claims, characterized in that the conveying line (3) and the tubular network (35, 36) are connected to a first blower device whereas the extracting line (4) and the collector network (43, 44) are connected to a second blower device.

6. Installation according to any one of claims 2 to 5, characterized in that the secondary cartridge input station is constituted by a side opening of the inlet tube (8) of the deflecting device which is closable by way of a sliding sleeve (9) whereas the secondary cartridge output station is constitued by a branch (13) of the single outlet of the collector network put into service by an inside pointer (45).

7. Installation according to claim 1, or claim 2, characterized in that the storing device (10) is constituted from the valve mechanism (6) of the conveying line, by a vertical tube (31, 32) in which the cartridges move by gravity, a valve mechanism (33) placed at its lower end to isolate it from extending it, said storing tube being adapted to be connected to the delivery channel (15b) of the blower device (15) via means (51) for detecting the passage of each incoming cartridge, the end portion (35a) of said tube being substantially vertical and having at its base a retractable closing plate (37) which constitutes means for retaining or releasing the cartridges (5), controlled by the central unit (19), whereas beyond said plate, the said tube is extended by a perforated tubular guide (39) of height substantially equal to that of a cartridge, which is closed cross-wise at its lower part by a second retractable closing plate (41), said guide being connected to the valve mechanism (14) belonging to the extracting line, the end part of said outlet being adapted to be connected to the induction channel (15a) of said blower device when the said second plate (41) is retracted.

Fig-1

0 002 979

Fig_2

Fig-3

Fig-4

Fig-5